Europäisches Patentamt

European Patent Office

Office européen des brevets

(11) Publication number: **0 134 130**
**B1**

(12) **EUROPEAN PATENT SPECIFICATION**

(45) Date of publication of patent specification: **17.05.89**

(21) Application number: **84305350.5**

(22) Date of filing: **07.08.84**

(51) Int. Cl.⁴: **B 65 D 33/20,** B 31 B 1/90, B 65 B 61/18

(54) **Containers.**

(30) Priority: **25.08.83 GB 8322885**

(43) Date of publication of application:
**13.03.85 Bulletin 85/11**

(45) Publication of the grant of the patent:
**17.05.89 Bulletin 89/20**

(84) Designated Contracting States:
**AT BE CH DE FR GB IT LI NL SE**

(56) References cited:
**CA-A- 774 969**
**CA-A- 952 487**
**DE-A-1 536 188**
**DE-A-2 045 760**
**DE-A-2 729 020**
**FR-A-1 128 152**
**FR-A-2 189 276**
**FR-A-2 345 355**
**GB-A- 916 266**
**GB-A-1 436 489**
**US-A-3 257 228**
**US-A-3 311 032**
**US-A-3 373 926**

(73) Proprietor: **Beiersdorf Aktiengesellschaft**
**Unnastrasse 48**
**D-2000 Hamburg 20 (DE)**

(72) Inventor: **Sanders, Bernard**
**Mont Clos Old Beaumont Hill**
**St. Peter Jersey Channel Islands (GB)**

(74) Representative: **Gordon, Richard John Albert**
**44 Monmouth Street**
**London WC2H 9EP (GB)**

## Description

This invention relates to containers.

In the packaging industry, packaging of products by a seamed tube method is well known. The seamed tube method comprises moving a web of flexible film material in a longitudinal direction of the web relative to a tubular former of a packaging machine. The web is guided by the former so that longitudinal marginal edge portions of the web overlap one another and are secured one to another to form a longitudinal back seam. The web is thus progressively formed into a tube which is advanced incrementally by sealing jaws. The jaws provide the tube of film material with a transverse seam while simultaneously severing the material of the tube longitudinally of the seam. Articles to be packaged are inserted into the tube through the former and the timing is controlled so that each article or batch of articles is synchronised to enter the tube after a transverse seam and subsequently incremental longitudinal movement of the tube has been effected but prior to a successive transverse seam being effected. Since the tube of film material is severed in each transverse seam, the arrangement is such that there is formed by each of two successive seams a flexible container containing an article or a predetermined batch of articles.

Although such containers generally are satisfactory with regard to protection of articles contained therein, a disadvantage of such containers is that they are difficult to open without use of an additional tool, such as a knife or a pair of scissors.

Another disadvantage of such containers is that, generally, once opened they are not satisfactorily reclosable.

The problem of providing a flexible container with a closure constituted by means comprising pressure sensitive adhesive so that the container may be opened and sealed again as desired has been considered in GB—A—916266. In particular, Figure 6 of GB—A—916266 discloses an easily openable container comprising a panel having an elongate opening location and a tape applied by a pressure sensitive contact adhesive to a surface of the said panel so as to bridge the opening location, the tape and the adhesive being of greater dimension than the opening location so as to provide a substantially airtight closure and the adhesive being reusable such that the tape is separably unitable with the said surface of the panel and the container including means for allowing the tape to be peeled from the said surface in a transverse direction of the opening location.

However, the flexible containers disclosed in GB—A—916266 are not formed by the seamed tube method. The method of making a flexible container disclosed in GB—A—916266 requires that pressure sensitive adhesive is applied to, or near to, at least one longitudinal edge of a travelling web of flexible material, the web then being cut into lengths transverse to the direction of travel, which lengths are then folded about transverse lines central or nearly central to the cut lengths whereby the pressure sensitive adhesive surfaces of each half mutually contact each other to form a reopenable and reclosable seam. With the seamed tube method a travelling web of flexible material is formed into a tube before being welded and simultaneously cut in transverse seams.

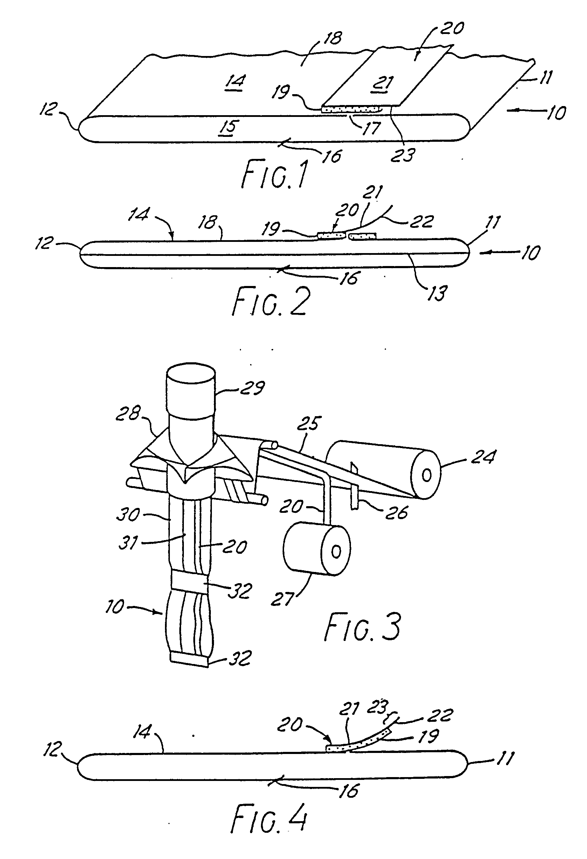

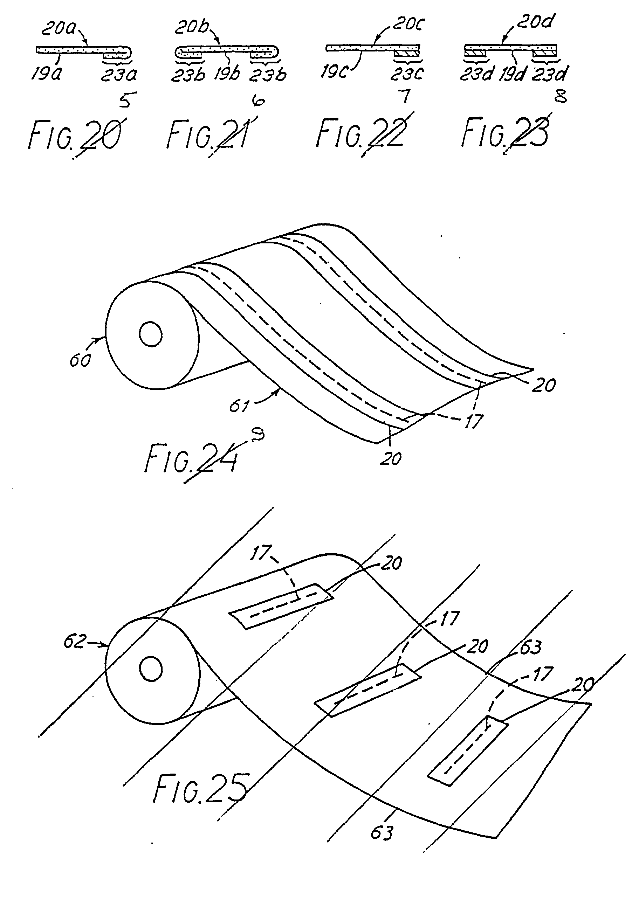

Another method of providing a flexible container with an easily openable and reclosable closure is disclosed in US—A—3257228. In particular, the embodiment illustrated in Figures 2 to 5 inclusive of US—A—3257228 comprises a web which bridges an opening location of a flexible container and is removably secured thereto by pressure sensitive adhesive coated on a lower surface of the web. The container is opened by peeling the web from the adjacent surface of the container, the adhesive remaining attached to the web, and the container is reclosed by re-applying the web by means of the adhesive whereby the web bridges the opening location.

The method disclosed in US—A—3257228 does not relate to the seamed tube method because, if a web having an adhesive coating is applied by the adhesive to a surface of flexible material being formed as a tube and the tube subsequently is provided with transverse welds, the web will be united with the material in the transverse welds and, in consequence, will not be removable so as to be re-applied to close the container in the manner indicated in Figure 5 of US—A—3257228.

In FR—A—2345355 there is proposed a method of manufacturing tamper evident containers of synthetic plastics film material in which the material is in the form of a web and is advanced through a machine in a direction parallel to a longitudinal axis of the web. The web is folded longitudinally, is slit longitudinally, is provided with an adhesive tape which extends longitudinally of and bridges the slit and the web subsequently is provided with spaced transversely extending rows of perforations. Finally, the web is slit and welded in spaced transverse welds providing spaced substantially parallel seams adjacent corresponding rows of perforations in completed containers thereby formed by the slitting and welding process. A portion of an adhesive coating of the tape provides closure means for the completed bags.

Although the proposal disclosed in FR—A—2345355 relates to manufacture of containers from a web of film material, the proposal does not involve manufacture of containers by the seamed tube method.

Furthermore, although in FR—A—2345355 the spaced parallel rows of perforations define a flap which would be separated from adjacent portions and peeled away therefrom to open a container and thereby provide a tamper evident feature, the container would not be air tight when closed because air would pass freely into the interior of the container through the perforations. In consequence, the containers could not be used for packaging of items adversely affected by ingress of air.

The invention provides the container as defined by Figure 6 of GB—A—916 266 characterised in that the container is obtained by the seamed tube method, wherein an opening location is on a front or rear surface of a panel and parallel to a longitudinal seam of the container and the tape releases only as far as the opening location so that the continued movement in the transverse direction causes opening of the container at the opening location.

The term 'opening location' may comprise a series of tear perforations or serrations or slits or a continuous slit, slot or line of weakening or cuts comprising a series of saw-tooth configuration.

Following is a description, by way of example only and with reference to the accompanying drawings, of one method of carrying the invention into effect.

In the drawings:

Figure 1 is a diagrammatic view shown partly in cross section of one embodiment of a container in accordance with the present invention, the container being in a closed condition and being shown in a storage position turned through 90° from a position in which the container would normally be orientated when being opened or closed,

Figure 2 is a diagrammatic cross section of the container shown in Figure 1 when being opened while in the storage position,

Figure 3 is a diagrammatic representation of a method of manufacturing containers as shown in Figures 1 and 2,

Figure 4 is a diagrammatic cross section similar to Figure 2 of another embodiment of a container in accordance with the present invention when being opened,

Figures 5 to 8 inclusive are diagrammatic cross sections of different embodiments of adhesive tapes which may be included in the construction of a container in accordance with the present invention, and

Figure 9 is a diagrammatic representation of one embodiment of a reel of material adapted for manufacture of containers in accordance with the present invention.

Referring now to Figures 1 and 2 of the drawings, there is shown a container 10 of synthetic plastics film material having upper and lower spaced substantially parallel folds 11, 12 and spaced substantially parallel side welds, one of which is shown at 13, extending at right angles to the upper and lower folds 11, 12 defining a front panel 14 and a rear panel 15. The rear panel is provided with a back seal 16 extending substantially parallel to the upper and lower folds 11, 12 and substantially mid-way between the folds. The front panel 14 is provided with a slit 17 extending substantially parallel to the upper and lower folds 11, 12 and being located in a direction of the side welds 13 nearer the upper fold 11 than the lower fold 12. The front panel 14 has an outer surface 18 to which is applied an adhesive coating 19 of a pressure sensitive contact adhesive tape 20, the adhesive bridging the slit 17 and extending longitudinally thereof throughout the whole length of the slit 17 from one to the other of the side welds 13. The tape 20 comprises a substrate 21 having a surface 22 which carries the adhesive coating 19. The adhesive 19 extends on the surface 22 for the full length of the substrate 21 and in a direction transversely of the substrate from one marginal edge thereof to a location spaced transversely inwardly from an opposite marginal edge thereof to provide a finger tab 23 extending longitudinally of the tape 20.

The container 10 is opened by grasping the finger tab 23 and pulling the tab away from an adjacent surface of the front panel 14. The action of turning the tab 23 away from the front panel 14 causes the substrate 21 to peel from the adhesive 19 in a direction towards the lower fold 12, the peeling action continuing as far as the slit 17 when the adhesive coating 19 separates into two portions — an upper portion having been separated from the substrate 21 and remaining on the outer surface 18 of the front panel 14 and a lower portion continuing to unite the substrate 21 and the portion of the front panel 14 below the slit 17. The division of the adhesive coating 19 results from the reaction applied to the upper surface 18 of the front panel 14 above the slit 17 to the force applied to the finger tab 23 no longer being present once the action of peeling the tape 20 in a direction from the upper fold 11 towards the lower fold 12 coincides with the slit 17. In consequence, the adhesive 19 is split, as shown in Figure 2, and the continuing force applied to the finger tab 23 results in the portion of the front panel 14 below the slit 17 being pulled away from the rear panel 15 thereby effecting opening of the container 10 at the slit 17.

The container 10 is re-closed by releasing the force applied to the finger tab 23 and re-uniting the surface 22 of the substrate 21 with the portion of the adhesive 19 remaining on the outer surface 18 of the front panel 14 above the slit 17, this being possible due to the "re-usable" characteristics of the adhesive 19 whereby the container 10 can be opened and re-closed and repeatedly reopened and re-closed.

Referring now to Figure 3 of the drawings, there is shown a diagrammatic representation of a method of manufacturing containers shown in Figures 1 and 2. The method is carried out on a form/fill/seal machine on which is rotatably mounted a reel 24 in the form of a wound web 25 of synthetic plastics film material. The web 25 is unwound from the reel 24 on the machine and is slit longitudinally by means of a blade 26 as the web 25 moves in a longitudinal direction away from the reel 24, thereby forming the slit 17. The adhesive tape 20, which is bobbin wound to form a reel 27 located below the web 25, is progressively unwound from the reel 27 and applied longitudinally to a lower surface of the web 25 such that the tape bridges the slit 17.

The web 25 having the tape 20 applied thereto subsequently is guided around a former 28 extending circumferentially of a tubular member 29 whereby the web 25 is formed into a configuration of a tube 30 a central longitudinal axis of which is in line with a central longitudinal axis of the tubular member 29 and opposite longitudinally extending marginal portions of the web 25 overlapping one another and being sealed one to another in a back seal 31 extending longitudinally of the tube 30.

The tube 30 is advanced incrementally in a downward longitudinal direction and is engaged by co-operating jaws (not shown) operation of which is synchronised with movement of the tube 30 so as to provide spaced transversely extending seams 32 and simultaneously sever the material of the tube 30 in a direction transverse to a longitudinal axis of the tube and mid-way through each seam 32 thereby providing a plurality of containers 10. Products to be packaged are inserted through the tubular member 29 in synchronism with movement of the tube 30 such that a product, or a predetermined number of products, are contained within each completed container 10.

The web 25 may be treated, for example by subjecting the web to electric corona discharge, so that the surface thereof destined to receive the adhesive tape 20 is "keyed" so as to receive the adhesive 19 of the tape 20. Such "keying" of the surface of the web 25 assists in ensuring that a portion of the adhesive 19 is separated from the surface 22 of the tape 20, as shown in Figure 2, when the container 10 is being opened.

Alternatively, the surface 22 of the substrate 21 of the tape 20 may be treated, such as by subjecting the surface to electric corona discharge or to application of a primer coating, so as to provide a "key" for reception of the adhesive. 19. In such a case, when a finger tab 23 of the tape 20 is pulled away from the front panel 14, the adhesive 19 remains in contact with the surface 22 of the substrate, as shown in Figure 4, and is not transferred from the surface 22 to the front panel 14 in the manner illustrated in Figure 2. However, as the tape 20 is peeled towards the lower fold 12 and is removed from the portion of the front panel 14 above the slit 17, the portion of the front panel 14 below the slit 17 is pulled away from the rear panel 15 by the force acting on the tape 20, thereby opening the container. As with the embodiment illustrated in Figure 2, the adhesive 19 is re-usable and, therefore, the container is re-closed by re-uniting the adhesive 19 with the portion of the front panel 14 above the slit 17.

In Figure 5, for example, a marginal portion of a tape 20a one surface of which is wholly coated with pressure sensitive contact adhesive 19a is folded longitudinally adjacent a marginal edge portion thereof to provide a finger tab 23a. In Figure 6 there is shown a tape 20b, one surface of which is wholly coated with pressure sensitive contact adhesive 19b, opposite longitudinal margins of which are folded towards one another to provide a pair of substantially parallel finger tabs 23b. The embodiment shown in Figures 7 and 8 correspond to the embodiments shown in Figures 5 and 6 respectively except that the finger tabs 23c and 23d respectively are provided by adhering additional material to the adhesive 19c, 19d respectively.

Each of the tapes 20, 20a, 20b, 20c or 20d may be an adhesive transfer tape or an adhesive non-transfer tape.

The finger tabs 23a, 23b, 23c or 23d may be formed prior to reeling of the associated tape 20a, 20b, 20c or 20d which may subsequently be bobbin wound or, alternatively, may be formed subsequent to unwinding and immediately prior to application to a surface.

It will be appreciated that providing an adhesive tape with a finger tab, formed without having to ensure that a portion of the substrate of the tape is clear of adhesive eliminates the need for zone coating or adhesive stripping equipment.

Referring now to Figure 9 of the drawings, there is shown a reel 60 of a film 61 of synthetic plastics film material which is slit longitudinally to provide two spaced slits 17 each being covered by a corresponding one of a pair of tapes 20. The reel 60 would be presented to a packaging machine having the features illustrated in Figure 3 but without the provision of the blade 26 and a dispenser for supplying the tape 20. The reel 60 would be installed on a machine in substitution for the reel 24 shown in Figure 3 and would be fed through the machine such that, on operation of the machine, the material would be converted into formed, filled and sealed containers having any of the configurations shown in Figures 1, 2 or 4.

## Claims

1. An easily openable container (10) comprising a panel (14) having an elongate opening location (17) and a tape (20) applied by a pressure sensitive contact adhesive (19) to a surface (18) of the said panel (14) so as to bridge the opening location (17), the tape (20) and the adhesive (19) being of greater dimension than the opening location (17) so as to provide a substantially airtight closure and the adhesive (19) being re-usable such that the tape (20) is separably unitable with the said surface (18) of the panel (14) and the container (10) including means (23) for allowing the tape (20) to be peeled from the said surface (18) in a transverse direction of the opening location (17) characterised in that the container (10) is obtained by the seamed tube method, the opening location (17) is on the front or rear surface (18) of the panel (14) and parallel to the longitudinal seam (16) of the container (10) and the tape (20) releases only as far as the opening location (17) so that the continued movement in the transverse direction causes opening of the container (10) at the opening location (17).

2. A container as claimed in claim 1 characterised in that the opening location (17) comprises a plurality of frangible portions which are severed when the tape (20) is separated from the said surface (18) of the panel (14).

3. A container as claimed in claim 1 characterised in that the adhesive (19) is rupturable on opening the container (10) thereby providing tamper evidence.

## Patentansprüche

1. Einfach zu öffnender Behälter (10) mit einer Wand (14) mit einer langgestreckten Öffnungsstelle (17) und einem Band (20), das mittels eines druckempfindlichen Kontaktklebers (19) auf eine Oberfläche (18) der Wand (14) so aufgebracht ist, das es die Öffnungsstelle (17) überbrückt, wobei das Band (20) und die Klebschicht (19) eine größere Abmessung haben als die Öffnungsstelle (17) um einemn im wesentlichen luftdichten Verschluß zu schaffen und die Klebschicht (19) wiederverwendbar ist, derart, daß das Band (20) lösbar mit der Oberfläche (18) der Wand (14) verbindbar ist, wobei der Behälter (10) Mittel (23) aufweist, um das Band (20) von der Oberfläche (18) quer zu der Öffnungsstelle (17) abziehen zu können, dadurch gekennzeichnet, daß der Behälter (10) mittels der Schlauchnaht-Methode gebildet ist, daß die Öffnungsstelle (17) an der vorderen oder hinteren Oberfläche (18) der Wand (14) und parallel zu der Längsnaht (16) des Behälters (10) ausgebildet ist, und daß das Band (20) nur bis zur Öffnungsstelle (17) ablösbar ist, so daß eine weitere Bewegung in Querrichtung eine Öffnung des Behälters (10) an der Öffnungsstelle (17) bewirkt.

2. Behälter nach Anspruch 1, dadurch gekennzeichnet, daß die Öffnungsstelle (17) eine Mehrzahl von abreißbaren Teilen aufweist, die zertrennt werden, wenn das Band (20) von der Oberfläche (18) der Wand (14) abgezogen wird.

3. Behälter nach Anspruch 1, dadurch gekennzeichnet, daß die Klebschicht (19) beim Öffnen des Behälters (10) zur Bildung einer Öffnungssicherung zerreißbar ist.

## Revendications

1. Récipient (10) pouvant être facilement ouvert, comprenant un panneau (14) comportant un emplacement d'ouverture allongé (17) et une bande (20) appliquée par un adhésif à contact sensible à la pression (19) sur une surface (18) dudit panneau (14) de manière à recouvrir l'emplacement d'ouverture (17), le ruban (20) et l'adhésif (19) étant d'une dimension supérieure à celle de l'emplacement d'ouverture (17) de manière à déterminer une fermeture sensiblement étanche à l'air et l'adhésif (19) pouvant être réutilisé de façon que le ruban (20) puisse être réuni de façon séparable à ladite surface (18) du panneau (14) et le récipient (10) comprenant des moyens (23) pour permettre au ruban (20) d'être pelé de ladite surface (18) en direction transversale à l'emplacement d'ouverture (17), caractérisé en ce que ledit récipient (10) est obtenu par le procédé du tube à coutures, l'emplacement d'ouverture (17) est sur la surface avant ou arrière (18) du panneau (14) et parallèle à la couture longitudinale (16) du récipient (10) et le ruban (20) ne se dégage que jusqu'à l'emplacement d'ouverture (17) de manière que la poursuite du mouvement en direction transversale provoque l'ouverture du récipient (10) à l'emplacement d'ouverture (17).

2. Récipient selon la revendication 1, caractérisé en ce que l'emplacement d'ouverture (17) comprend plusieurs portions pouvant être brisées, qui sont sectionnées quand le ruban (20) est séparé de ladite surface (18) du panneau (14).

3. Récipient selon la revendication 1, caractérisé en ce que l'adhésif (19) peut être rompu lors de l'ouverture du récipient (10), constituant ainsi une preuve d'une tentative de violation.

FIG.1

FIG.2

FIG.3

FIG.4

20a

19a          23a

5

FIG. 20

20b

23b  19b  23b

6

FIG. 21

20c

19c      23c

7

FIG. 22

20d

23d  19d  23d

8

FIG. 23

60

61

9

FIG. 24

20

17

20

62

17

20

17

20    63

17    20

63

FIG. 25

63